# EUROPÄISCHE PATENTSCHRIFT

(11) **EP 0 418 720 B1**
(45) Veröffentlichungstag und Bekanntmachung des Hinweises auf die Patenterteilung: **26.01.1994**
(21) Anmeldenummer: 90117565.3
(22) Anmeldetag: 12.09.1990
(51) Int. Cl.: F16L 1/028, F16L 55/162, E03F 3/06, E03B 1/02

(54) **Verfahren zum Erneuern von Sickerwasserleitungen in Deponien sowie Einrichtung zum Durchführen des Verfahrens**
Method for renewing catch water drains in garbage dumps, and device to realize the method
Méthode pour renouvellement à tuyaux de drainage en depôt de déchets et dispositif pour la réalisation de cette méthode

(30) Priorität: 21.09.1989 DE 3931458
(43) Veröffentlichungstag der Anmeldung: 27.03.1991
(73) Patentinhaber: Dyckerhoff & Widmann Aktiengesellschaft, D-81902 München (DE)
(72) Erfinder:
(74) Vertreter: Patentanwälte Möll und Bitterich

(56) Entgegenhaltungen:
- EP-A- 342 246
- DE-A- 3 620 026
- DE-C- 3 832 214
- DE-C- 3 903 864
- US-A- 4 886 396

## Beschreibung

Die Erfindung betrifft ein Verfahren zum Erneuern von Sickerwasserleitungen in Deponien sowie eine Einrichtung zum Durchführen des Verfahrens.

Bei Deponien für Abfälle werden üblicherweise oberhalb der Sohldichtungen Rohrleitungen mit durchbrochener Wandung, sogenannte Sickerwasserleitungen, angeordnet, um durch den Deponiekörper hindurchtretende Sickerwässer abführen, untersuchen und gegebenenfalls reinigen zu können. Im langjährigen Betrieb von Deponien hat sich gezeigt, daß sich diese Sickerwasserleitungen je nach Art der Inhaltsstoffe der Sickerwässer mehr oder weniger zusetzen. Infolge hoher, oft auch ungleicher Lasten aus dem Deponiegut und unterschiedlicher Bodenbeschaffenheiten ergeben sich oft auch unterschiedliche Setzungen mit der Folge, daß die Rohrleitungen aus ihrem planmäßigen Verlauf gebracht werden, zum Teil sogar einbrechen. Es ist deshalb notwendig, solche Sickerrohrleitungen zu sanieren, d.h. die zugesetzten oder eingebrochenen Stellen aufzubohren und die gesamte Altrohrleitung durch einen Neurohrstrang zu ersetzen.

In diesem Zusammenhang ist es bekannt, Aufweitvorrichtungen, das sind mit einem konischen, meißelartig ausgebildeten Aufweitkopf und einem meist pneumatischen Schlagwerk versehene Bodenverdrängungsgeräte, durch das Altrohr zu führen, dieses dabei aufzubrechen und seine Teile in das umgebende Erdreich zu verdrängen, um Platz für einen Neurohrstrang zu schaffen. Der Neurohrstrang kann entweder unmittelbar der Aufweitvorrichtung folgend, gegebenenfalls an diese angehängt, auch mit Unterstützung durch ein Zugglied oder nachträglich im Schutze eines wiedergewinnbaren Stahlschutzrohres eingezogen werden.

Die Sanierung solcher Sickerwasserleitungen erfolgt zwischen in den Boden abgeteuften Schächten, und zwar zwischen einem Startschacht und einem Zielschacht. Da aus Gründen der Wirtschaftlichkeit und der Abmessungen der Deponien möglichst große Entfernungen zwischen Start- und Zielschacht überbrückt werden müssen und meist auch hohe Überdeckungen vorhanden sind, ist die Gefahr groß, daß die Aufweitvorrichtung auf ihrem Weg vom Startschacht zum Zielschacht stecken bleibt. Ein solches Steckenbleiben des Geräts bereitet wegen der schwierigen Bergung ganz erhebliche Probleme. Die Gefahr des Steckenbleibens ist um so größer, je größer die Länge der Strecke ist, über welche die Aufweitvorrichtung vom Startschacht zum Zielschacht arbeiten soll, aber auch je höher die Überdeckung ist, da entsprechend tief dann eine Grube ausgehoben werden muß, um das steckengebliebene Gerät zu bergen.

Um die Gefahr einer Behinderung der Aufweitvorrichtung durch den nachzuziehenden Neurohrstrang zu vermeiden, die Aufweitvorrichtung also von dem nachzuziehenden Neurohrstrang, der ein Schutzrohr oder auch ein neues Versorgungsrohr sein kann, gewissermaßen zu entlasten, ist es bekannt, den Neurohrstrang ohne feste Verbindung zur Aufweitvorrichtung mit dem Fortschreiten desselben in dem von diesem erweiterten Kanal nachzuschieben oder nachzuziehen (DE 39 03 864C1). Bei dieser bekannten Vorrichtung treibt ein Bodenverdrängungshammer mit konischer Spitze und einem vibrierend schlagenden Meißelkopf im Inneren einen damit schub- und druckfest verbundenen Schneidkaliber mit Schneidflügeln vor sich her, der über ein Zugkabel mit einer Winde in der Zielgrube verbunden ist. Der eigentliche Vortrieb des Bodenverdrängungshammers unter Aufschneiden und Verdrängen des Altrohrs in das umgebende Erdreich erfolgt jedoch durch den vibrierend schlagenden Meißelkopf, der einen rückwärtigen Aufweitungskaliber aufweist.

Durch die gesonderte Druckanwendung auf den Neurohrstrang ist zwar die Aufweitvorrichtung selbst von der Notwendigkeit entlastet, den Neurohrstrang nachziehen zu müssen. Ungeachtet dessen ist die Gefahr nicht völlig beseitigt, daß die Aufweitvorrichtung dennoch steckenbleiben könnte und durch Aufgraben geborgen werden muß.

Anstatt das Altrohr aufzubrechen und seine Teile in das umgebende Erdreich zu verdrängen, ist es auch bekannt, das Altrohr durch Zerfräsen mittels eines Fräskopfes mit gröperem Durchmesser zu zerstören und mit dem Fräskopf zugleich den Neurohrstrang einzubringen. Dabei müssen auf den Fräskopf sowohl ein Drehmoment, als auch eine axiale Vorschubkraft wirken. In diesem Zusammenhang ist eine Vorrichtung bekannt geworden, bei der die Vorschubkraft über im Anfahrschacht angeordnete hydraulische Pressen auf den Neurohrstrang ausgeübt wird, während das Drehmoment vom Zielschacht aus über eine starre Welle aufgebracht wird (DE 36 20 026 A1). Die Welle ist zugleich als Förderschnecke ausgebildet und dient so zugleich der Abförderung des durch Zerfräsen des Altrohrs gewonnenen Materials durch das Altrohr hindurch in den Zielschacht. Diese Arbeitsweise ist auch umkehrbar, d.h. die Vorschubkraft auf den Fräskopf kann auch mittels eines mit einer Winde verbundenen Zugseils aus dem Zielschacht heraus aufgebracht werden, während sich im Anfahrschacht ein durch das Neurohr hindurch mittels einer Welle auf den Fräskopf wirkender Drehantrieb befindet.

Der Erfindung liegt deshalb die Aufgabe zugrunde, ein Verfahren und eine Einrichtung dieser Art anzugeben, bei dem bzw. bei der ein Steckenbleiben der Aufweitvorrichtung mit Sicherheit ausgeschlossen bzw. bei einem Steckenbleiben die Aufweitvorrichtung geborgen werden kann, ohne die Deponie an der betreffenden Stelle aufgraben zu müssen.

Nach der Erfindung wird diese Aufgabe verfahrensmäßig durch die im Patentanspruch 1 angegebenen Merkmale gelöst.

Der Grundgedanke der Erfindung besteht darin, der Aufweitvorrichtung ein vorderes, bis in den Zielschacht reichendes, und ein rückwärtiges, bis in den Startschacht reichendes Steuerglied zuzuordnen, die über die Aufweitvorrichtung hinweg kraft- und bewegungsschlüssig miteinander verbunden sind, so daß die Aufweitvorrichtung durch gleichzeitige und gleichsinnige Beaufschlagung dieser beiden Steuerglieder durch das Altrohr hindurchgetrieben werden kann. Durch die Zugbeanspruchung des vorderen Steuergliedes ist die Richtungstreue gewährleistet. Das rückwärtige Steuerglied dient zugleich als Schutzrohr, das den aufgefahrenen Hohlraum sichert und in dessen Schutz dann ein neues Versorgungsrohr eingezogen werden kann.

Ein wesentlicher Vorteil der Erfindung ist, daß der Vortrieb der Aufweitvorrichtung und das Verdrängen des zertrümmerten Altrohres in das umgebende Erdreich im wesentlichen durch Aufbringen einer Zugkraft auf das vordere Steuerglied und das Nachführen des Stahlschutzrohres durch Aufbringen einer Druckkraft auf diese erfolgen, so daß die durch das Schlagwerk erzeugte kinetische Energie im wesentlichen zum Zerstören der alten Sickerrohrleitung zur Verfügung steht und nicht für den Vortrieb des Gerätes oder zum Verdrängen der Altrohrscherben verbraucht wird.

Aus der Drucksteifigkeit und der kraft- und bewegungsschlüssigen Verbindung des vorderen und des rückwärtigen Steuergliedes mit der Aufweitvorrichtung ergibt sich die Möglichkeit einer Kraft- und Bewegungsumkehr mit der Folge, daß die Aufweitvorrichtung,wenn sie dennoch einmal steckengeblieben sein sollte, durch Kraftumkehr um ein gewisses Stück zurückgefahren und neu angesetzt, aber auch in den Startschacht zurückgeholt werden kann, um gegebenenfalls repariert oder umgerüstet zu werden.

Gegenstand der Erfindung ist noch eine Einrichtung zum Durchführen des Verfahrens nach Patentansruch 1 und 2 gemäß Patentanspruch 5.

Vorteilhafte Weiterbildungen der Erfindung ergeben sich aus den Unteransprüchen.

Die Erfindung wird nachstehend anhand der Zeichnung näher erläutert. Es zeigen die
- Fig. 1a bis c: schematisch drei Phasen des erfindungsgemäßen Verfahrens zur Sanierung einer Sickerrohrleitung in einer Deponie,
- Fig. 2: das Detail II in Fig. 1a in größerem Maßstab,
- Fig. 3: einen Schnitt entlang der Linie III-III in Fig. 2,
- Fig. 4: die Durchörterung eines verkrusteten Sickerwasserrohres mittels einer Förderschnecke,
- Fig. 5: die Durchörterung einer Rohrbruchstelle mittels eines Schneckenbohrkopfes,
- Fig. 6: einige Querschnitte durch den Schneckenbohrkopf nach Fig. 5, die
- Fig. 7 und 8: Seiten- und Stirnansicht eines Aufweitkopfes, die
- Fig. 9 bis 11: Längsschnitt, Stirnansicht und Ausschnitt aus einer Seitenansicht einer anderen Ausführungsform eines Aufweitkopfes,
- Fig. 12: einen Teillängsschnitt durch ein Rohrverbindungselement,
- Fig. 13: das Detail XIII aus Fig. 12 in größerem Maßstab,
- Fig. 14: einen Schnitt entlang der Linie XIV-XIV in Fig. 12,
- Fig. 15: eine schematische Darstellung einer Einziehvorrichtung für den Neurohrstrang,
- Fig. 16: das Detail XVI aus Fig. 15 in größerem Maßstab,
- Fig. 17: das Detail XVII aus Fig. 16 in größerem Maßstab,
- Fig. 18: das Detail XVIII aus Fig. 16 in größerem Maßstab,
- Fig. 19: eine Draufsicht auf die Darstellung der Fig. 18,
- Fig. 20: das Ende des Stahlschutzrohres beim Ziehen und
- Fig. 21: einen Schnitt entlang der Linie XXI-XXI in Fig. 20.

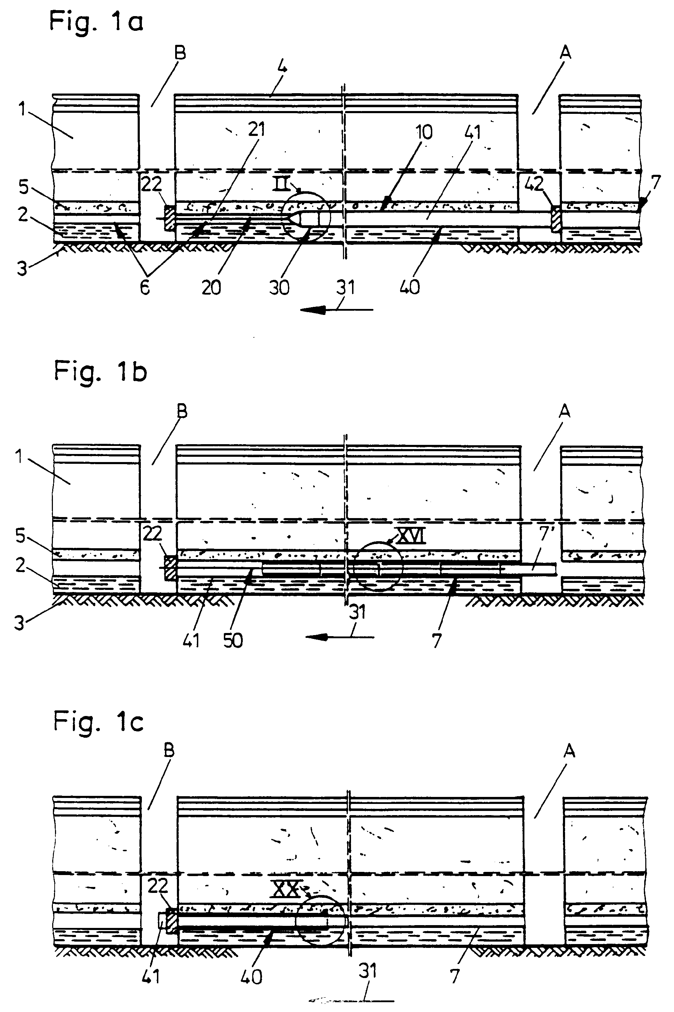

In den Fig. 1a bis c sind in schematischen Längsschnitten durch eine Deponie entlang einer darin verlegten Sickerwasserleitung drei wesentliche Phasen des Verfahrens unter Anwendung der Einrichtung nach der Erfindung dargestellt. Dabei ist angedeutet, wie der Deponiekörper 1 unter Zwischenschaltung einer Basisabdichtung 2, z.B. aus mineralischem Material auf dem Untergrund 3 aufliegt. Der Deponiekörper 1 ist im dargestellten Ausführungsbeispiel an der Oberseite mit einer Oberflächenabdeckung 4 versehen, die z.B. aus einer Oberflächenabdichtung, einer Gas- und Sickerwasserdrainage und einer Rekultivierungsschicht bestehen kann. Oberhalb der Basisabdichtung 2 liegt in einer Flächenfilterschicht 5 aus Filterkies die schadhafte, zu sanierende Sickerrohrleitung 6, nachstehend als Altrohrleitung bezeichnet. Die Altrohrleitung 6 soll durch eine neue Sickerrohrleitung 7, den Neurohrstrang, ersetzt werden.

Zu diesem Zweck werden in den Deponiekörper 1 zunächst ein Startschacht A und ein Zielschacht B niedergebracht, um Zugang zu der Altrohrleitung 6 zu haben. Im Startschacht A wird sodann die erfindungsgemäße Einrichtung angesetzt, die in Fig. 1a in ihrer Gesamtheit mit 10 bezeichnet ist. Die gesamte Einrichtung 10 besteht dann aus dem vorderen Steuerglied 20, der eigentlichen Aufweitvorrichtung 30 sowie dem rückwärtigen Steuerglied 40, das in diesem Falle aus einem Stahlschutzrohr 41 besteht. Das vordere Steuerglied 20, im einfachsten Fall eine Schwerstange 21 oder ein Gewindestab, ist im Zielschacht B mit einer Vorrichtung 22 verbunden, durch die es mit Zug und Druck beaufschlagt werden kann, z.B. doppeltwirkende Zylinder-Kolben-Einheiten; in entsprechender Weise ist auch im Startschacht A eine Vorrichtung 42 vorgesehen, durch die das Stahlschutzrohr 41 als rückwärtiges Steuerglied 40 mit Zug und Druck beaufschlagt werden kann. Sowohl die Schwerstange 21, als auch das Stahlschutzrohr 41 bestehen aus einzelnen Abschnitten, die im Startschacht A eingesetzt und im Zielschacht B wieder entnommen werden.

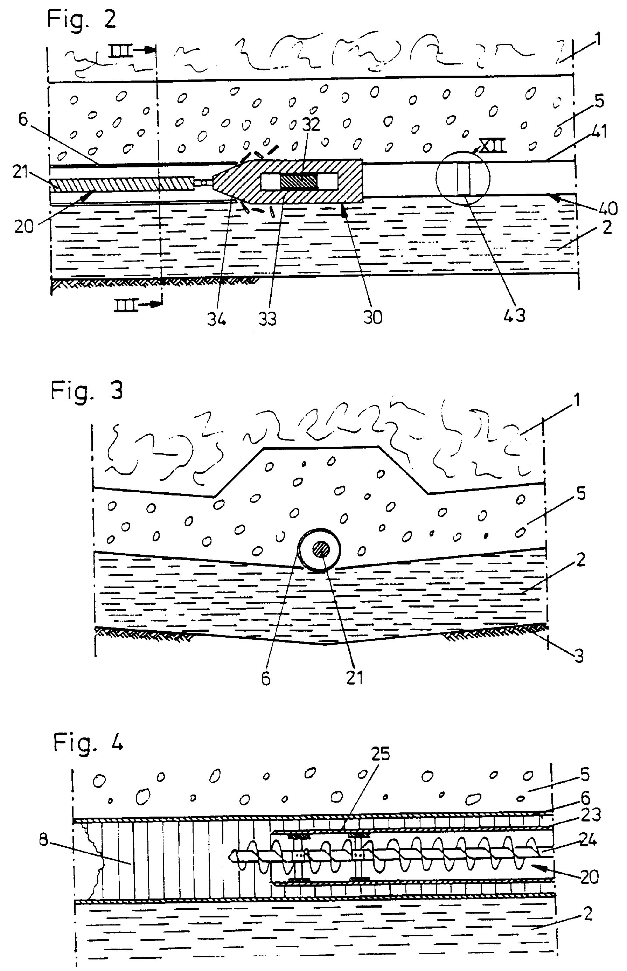

Wie vor allem Fig. 1a zeigt, wird durch Beaufschlagung der Schwerstange 21 mit Zug und des Stahlschutzrohres 41 mit Druck die Aufweitvorrichtung 30 in Richtung des Pfeiles 31 durch die Altrohrleitung 6 hindurchgetrieben. Dabei wird diese aufgeweitet und zerstört; die Bruchstücke werden in den umgebenden Drainagekörper der Flächenfilterschicht 5 verdrängt (Fig. 2). Der vorübergehenden Sicherung des erzeugten Hohlraumes dient das Stahlschutzrohr 41, das zugleich eingeführt wird.

Verfahrensmäßig liegen vor der in Fig. 1a dargestellten Arbeitsphase noch Maßnahmen zur Einführung des vorderen Steuergliedes 20 in die Altrohrleitung 6. Das Einschieben einer Schwerstange 21 aus einzelnen miteinander verbundenen Abschnitten gelingt aus dem Startschacht A heraus nur dann, wenn die Altrohrleitung 6 noch durchgängig ist. Wenn die Altrohrleitung 6 nicht durchgängig, z.B. verkrustet oder eingebrochen sein sollte, muß sie zunächst durchörtert und durchgängig gemacht werden. Wie in diesem Fall vorgegangen werden kann, wird weiter unten noch anhand der Fig. 4 bis 6 erläutert werden.

Wesentlich für die Erfindung ist jedenfalls, daß, wie Fig. 1a erkennen läßt, zwischen Startschacht A und Zielschacht B eine durchgehende kraft- und bewegungsschlüssige Verbindung besteht, so daß durch Umkehr der Kraftbeaufschlagung des Systems in den beiden Vorrichtungen 22 und 42 die gesamte Einrichtung 10 auch entgegen der Vortriebsrichtung gemäß Pfeil 31 bewegt, gegebenenfalls neu angesetzt, aber auch vollständig in den Startschacht A zurückgeholt werden kann.

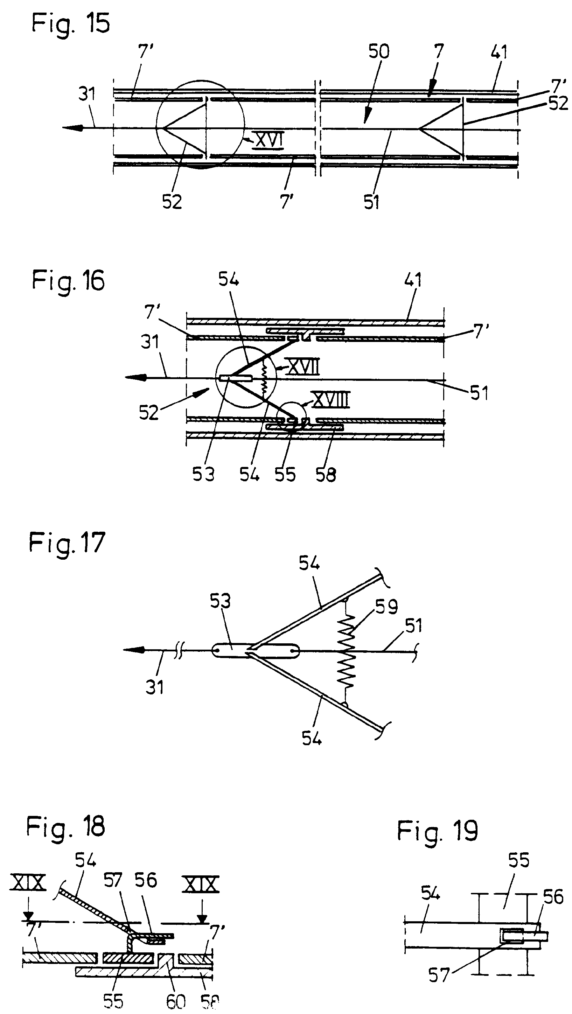

Ist auf diese Weise das Stahlschutzrohr 41 vollständig in den Bereich zwischen Startschacht A und Zielschacht B eingebracht, dann wird mittels einer Einziehvorrichtung 50 der Neurohrstrang 7 eingezogen. Wie aus Fig. 1b erkennbar, wird dabei die Zugkraft wieder durch die Vorrichtung 22 im Zielschacht B ausgeübt; die einzelnen Abschnitte 7' des Neurohrstranges 7 werden im Startschacht A angesetzt. Die Einziehvorrichtung 50 wird weiter unten anhand der Fig. 15 bis 19 noch näher erläutert werden.

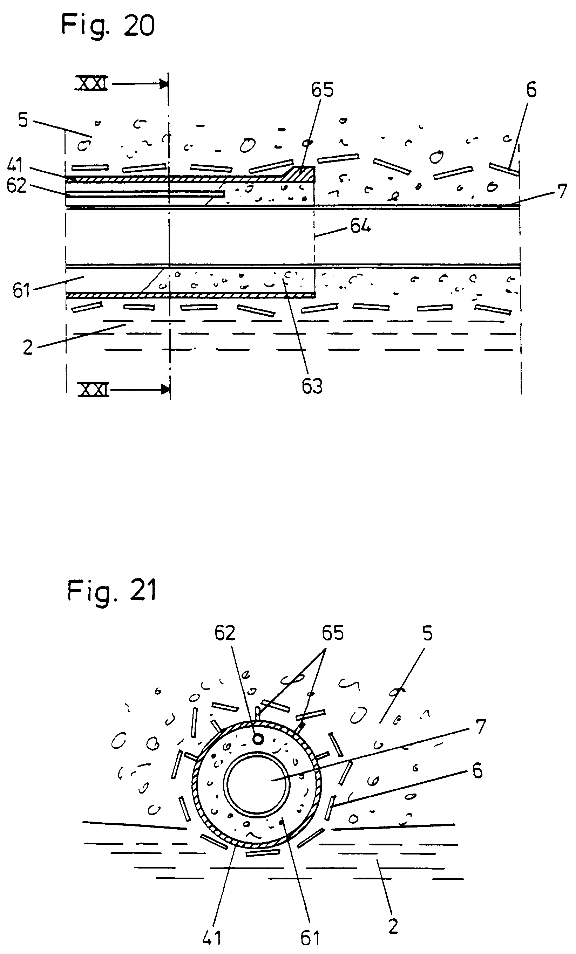

Ist der Neurohrstrang 7 eingeführt, dann wird wiederum mittels der gegebenenfalls angepaßten oder umgebauten Vorrichtung 22 im Zielschacht B das Stahlschutzrohr 41 gezogen und wiedergewonnen (Fig. 1c). Wie im einzelnen noch anhand der Fig. 20 und 21 zu beschreiben sein wird, ist es dabei nicht nur möglich, den Ringraum zwischen dem Neurohrstrang 7 und dem Schutzrohr 41 mit Filtermaterial auszufüllen, sondern auch ein Gewölbe zu zerstören, das sich beim Verdrängen des Altrohres 6 um das Stahlschutzrohr 41 herum bilden kann, um eine satte Bettung des Neurohrstranges 7 zu erreichen.

Bevor die erfindungsgemäße Einrichtung an eine Altrohrleitung 6 an- bzw. eingesetzt werden kann, ist es oft notwendig, diese durchgängig zu erörtern. Ist die Altrohrleitung 6 nur mit Verkrustungen 8 bedeckt, reicht es oft aus, dem als Pilotrohr 23 ausgebildeten vorderen Steuerglied 20 als Löse- und Fördervorrichtung z.B. eine Förderschnecke 24 zuzuordnen, die am vorderen Ende 25 des Pilotrohres 23 sowie an Zwischenpunkten gegebenenfalls auswechselbar befestigt ist (Fig. 4).

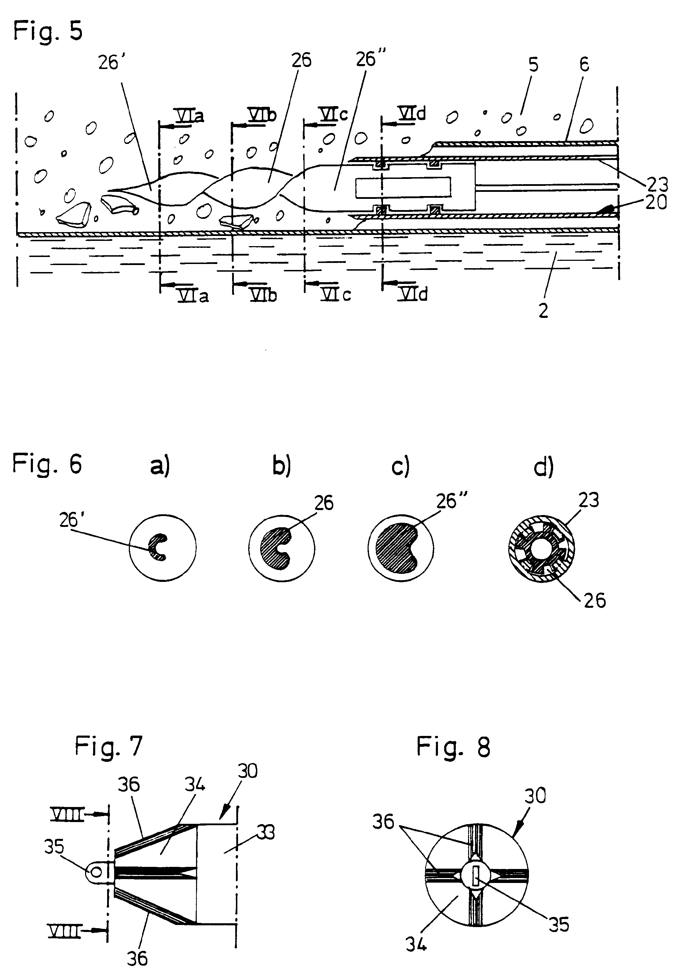

Ist die Altrohrleitung 6 dagegen stellenweise eingebrochen (Fig. 5), kann am vorderen Ende des Pilotrohres 23 auch ein Schneckenbohrkopf 26 demontierbar befestigt werden. Dieser Schneckenbohrkopf 26 hat, wie insbesondere in den Querschnitten der Fig. 6a bis c dargestellt ist, zunehmende Dicke, so daß er mit seiner Spitze 26' zunächst eine Richtung vorgibt und das Material löst, das er dann mit zu seinem Ende 26'' hin zunehmender Dicke in den umgebenden Drainagekörper verdrängt. Fig. 6d zeigt in einem Schnitt VId-VId in Fig. 5 eine Art Bajonettverschluß als eine Möglichkeit zur Verbindung des Schneckenbohrkopfes 26 mit dem Pilotrohr 23.

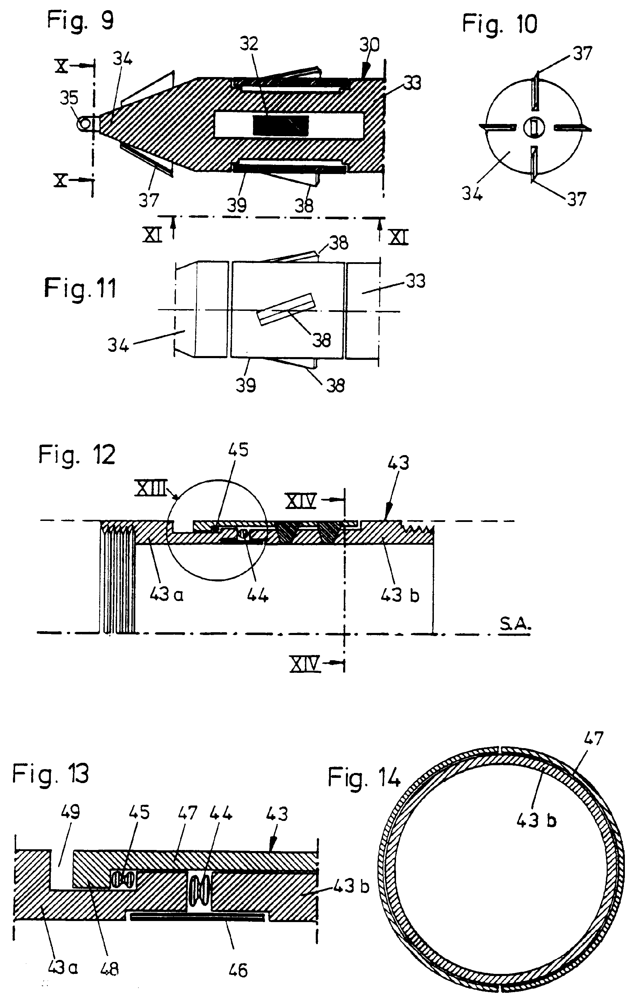

Die eigentliche Aufweitvorrichtung 30 ist, wie in Fig. 9 angedeutet, mit einem Kolben 32 ausgestattet, der in einem Aufweitkörper 33 in axialer Richtung hin- und herbewegbar ist. Der zylindrische Aufweitkörper 33 ist an seinem vorderen Ende als konischer Aufweitkopf 34 ausgebildet, an dem sich eine Öse 35 zur Befestigung des vorderen Steuergliedes 20 befindet.

An dem Aufweitkopf 34 sind Abbruchwerkzeuge angeordnet, die auf das Material der zu zerstörenden Altrohrleitung 6 abgestimmt werden können. Dies können, wie in den Fig. 7 und 8 dargestellt, keilförmige Schneiden 36 sein, die zum Aufbrechen von Steinzeugrohren geeignet sind, aber auch mit Schneiden versehene feste Messer 37, wie in den Fig. 9 und 10 gezeigt, die zum Zerschneiden von Altrohren aus Kunststoff dienen. Um die durch diese Messer 37 aus dem Altrohrstrang 6 geschnittenen langen Kunststoffstreifen in einzelne Stücke zu zerschneiden, sind schräg zur Mantellinie des Aufweitkörpers 33 verlaufende Messer 38 vorgesehen, die fest an einem den Aufweitkörper 33 umgebenden und gegenüber diesem frei drehbaren Mantelring 39 befestigt sind (Fig. 9 und 11). Aus der Vorschubkraft und der Neigung der Messer 38 resultiert eine in Ringrichtung verlaufende Kraftkomponente, die den Mantelring 39 in Drehung versetzt, wodurch die langen Kunststoffstreifen in rautenförmige Stücke zerschnitten werden.

Infolge unterschiedlicher Auflast durch das Deponiegut und unterschiedlicher Baugrundverhältnisse kann es im Verlauf einer Sickerrohrleitung zu Abweichungen von der planmäßigen Lage kommen. Die erfindungsgemäße Einrichtung muß deshalb in der Lage sein, gewissen Krümmungen im Verlauf der Gradiente zu folgen. Da das vordere und das rückwärtige Steuerglied drucksteif ausgebildet sind, müssen, jeweils in Abhängigkeit vom Durchmesser, die einzelnen Abschnitte zumindest des Stahlschutzrohres 41 gelenkig miteinander verbunden sein. Dies wird nach der Erfindung dadurch erreicht, daß zwischen zwei für eine Verschraubung bestimmten Rohrabschnitten ein Rohrverbindungselement 43 gesetzt wird.

Ein solches Rohrverbindungselement 43, das in den Fig. 12 bis 14 näher dargestellt ist, besteht aus zwei Teilen, einem vorderen Rohrstück 43a und einem rückwärtigen Rohrstück 43b, die unter Zwischenschaltung eines Dichtungsringes 44 stumpf miteinander gestoßen sind. Die Stoßfuge kann durch eine Manschette 46, z.B. aus Kunststoff, nach innen abgedeckt sein (Fig. 13). Die zugfeste Verbindung wird über eine mehrteilige Stahlmanschette 47 bewirkt, die mit einem nach innen gerichteten Flansch 48 in eine Ausnehmung 49 im vorderen Rohrstück 43a eingreift. Dort ist ein weiterer ähnlich ausgebildeter Dichtungsring 45 angeordnet. Die Stahlmanschette 47 übergreift das rückwärtige Rohrstück 43b und ist an diesem lösbar befestigt.

Zu der erfindungsgemäßen Einrichtung gehört auch eine Einziehvorrichtung 50 für einen neuen, aus einzelnen z.B. mit Doppelmuffen miteinander gestoßenen Rohrstücken bestehenden Sickerrohrstrang. Eine solche Vorrichtung ist in den Fig. 15 bis 19 dargestellt. Dabei ist in Fig. 15 erkennbar, wie in ein Stahlschutzrohr 41 die einzelnen Abschnitte 7' eines neuen Sickerrohrstranges 7 eingezogen werden. Zu diesem Zweck bedient man sich einer Zugvorrichtung aus einem Zugseil 51, an dem in dem ein- oder mehrfachen der Länge der einzelnen Rohrstücke 7' entsprechenden Abständen Haltevorrichtungen 52 angeordnet sind, die jeweils in eine Fuge zwischen zwei Rohrstücken 7′ eingreifen.

Jede Haltevorrichtung 52 besteht, wie Fig. 16 zeigt, aus einem zentralen Halteteil 53, an dem eine Anzahl von speichenartigen Haltearmen 54 angebracht ist. Die Haltearme 54 erstrecken sich in radialer Richtung abgespreizt zu einem Haltering 55, der denselben Durchmesser hat wie der neue Sickerrohrstrang 7 und jeweils zwischen zwei Rohrstücken 7' liegt. Die Befestigung der Haltearme 54 an dem Haltering 55 kann über aufragende Haken 56 erfolgen, in welche die Enden der Haltearme 54 mit ösen 57 einhängbar sind. Die Haltearme 54 können in eingehängter Stellung durch eine Zugfeder 59 belastet sein (Fig. 17). Dadurch lösen sie sich bei einer Bewegung entgegen der Einziehrichtung (Pfeil 31) aus den Haken 56 und werden nach innen zusammengezogen, so daß das Zugseil 51 aus der neuen Sickerrohrleitung 7 herausgezogen werden kann. Statt durch eine Zugfeder 59 kann die Spreizung der Haltearme 54 auch durch eine Verspannung gegen die Haken 56 erzeugt werden, die eine elastische Rückstellkraft bewirkt. Gegen eventuelles Eindringen von Material können die Stoßfugen zwischen zwei Rohrstücken 7' durch Manschetten 58 abgedeckt sein, die durch einen nach innen gerichteten Flansch 60 in ihrer Position gehalten werden.

Nach der Erfindung ist es auch möglich, nach dem Einziehen des neuen Sickerrohrstranges 7 den zwischen diesem und dem Stahlschutzrohr 41 verbliebenen Ringraum 61 mit Filtermaterial 63 auszufüllen. Zu diesem Zweck ist es erforderlich, den neuen Sickerrohrstrang 7 in der in Fig. 20 angedeuteten zentrischen Lage zu halten; dies kann durch geeignete Abstandhalter bewirkt werden. Mittels einer Sonde 62 aus Stahl, Kunststoff oder dergleichen kann dann ein Filtermaterial 63 eingespült werden, wobei als Einspülhilfe Wasser oder Luft verwendet werden können.

Zugleich mit oder auch nach dem Einspülen des Filtermaterials 63 wird das Stahlschutzrohr 41 gezogen. Hier können am Rohrende 64 vorzugsweise im oberen Bereich Vorsprünge 65 angeordnet sein, die in das zuvor in den umgebenden Drainagekörper verdrängte, auch die Scherben der Altrohrleitung 6 enthaltende Material einschneiden und so eine etwa beim Verdrängen entstandene Gewölbewirkung zerstören, so daß der neue Sickerrohrstrang 7 wieder satt gebettet ist. Das Filtermaterial 63 hat in diesem Zusammenhang auch den Vorteil, daß es den neuen Sickerrohrstrang 7 von den im Erdreich verbleibenden Scherben trennt, die manchmal scharfkantig sein können, so daß Beschädigungen oder gar Zerstörungen des neuen Sickerrohrstranges 7 nicht zu befürchten sind. Die Vorsprünge 65 können demontierbar sein, so daß sie von Fall zu Fall eingesetzt werden können.

## Patentansprüche

1. Verfahren zum Erneuern von Sickerwasserleitungen in Deponien, bei dem zwischen einem Startschacht (A) und einem Zielschacht (B) mittels einer mit Unterstützung durch ein sich bis in den Zielschacht (B) erstreckendes Zugglied durch die Altrohrleitung geführten, mit einem Schlagwerk versehenen Aufweitvorrichtung die Altrohrleitung aufgebrochen und in das umgebende Erdreich verdrängt und zugleich ein Schutzrohr nachgeschoben wird, dadurch gekennzeichnet, daß die Aufweitvorrichtung (30) mit dem als vorderes Steuerglied (20) drucksteif ausgebildeten Zugglied (21) und einem ihr vom Startschacht (A) her nachgeführten Stahlschutzrohr (41) als rückwärtiges Steuerglied (40) kraftschlüssig verbunden und durch gleichzeitige und gleichsinnige Beaufschlagung des vorderen Steuergliedes (20) und des rückwärtigen Steuergliedes (40) durch eine in axialer Richtung wirkende Kraft durch die Altrohrleitung (6) hindurchgetrieben wird, so daß die durch das Schlagwerk ausgeübte Schlagenergie zumindest zum wesentlichen Teil zum Aufbrechen der Altrohrleitung (6) nutzbar ist und daß das Stahlschutzrohr (41) nach dem Einziehen des Neurohrstranges (7) gezogen wird und seine Teile wiedergewonnen werden.

2. Verfahren nach Anspruch 1, dadurch gekennzeichnet, daß die Kraftbeaufschlagung umkehrbar ist.

3. Verfahren nach Anspruch 1 oder 2, dadurch gekennzeichnet, daß der Ringraum (61) zwischen dem Neurohrstrang (7) und dem Stahlschutzrohr (41) mit Filtermaterial (63) ausgefüllt wird.

4. Verfahren nach Anspruch 3, dadurch gekennzeichnet, daß das Filtermaterial (63) im Zuge des Ziehens des Stahlschutzrohres (41) durch Einspülen eingebracht wird.

5. Einrichtung zum Durchführen des Verfahrens nach Patentanspruch 1 und 2 mit einer mit einem Schlagwerk versehenen Aufweitvorrichtung und mit einem am vorderen Ende der Aufweitvorrichtung anbringbaren, sich durch das Altrohr bis zum Zielschacht erstreckenden Zugglied sowie mit einem am rückwärtigen Ende der Aufweitvorrichtung anbringbaren, vom Startschacht her nachführbaren Stahlschutzrohr, dadurch gekennzeichnet, daß sowohl das Zugglied (21), als auch das Stahlschutzrohr (41) als jeweils vorderes (20) bzw. rückwärtiges Steuerglied (40) aus einzelnen Abschnitten bestehen, zug- und druckfest ausgebildet und mit der Aufweitvorrichtung (30) kraftschlüssig verbunden sind und daß sowohl das vordere Steuerglied (20) vom Zielschacht (B), als auch das rückwärtige Steuerglied (40) vom Startschacht (A) aus gleichzeitig und gleichsinnig mit einer Zug- bzw. Druckkraft beaufschlagbar sind.

6. Einrichtung nach Anspruch 5, dadurch gekennzeichnet, daß die Abschnitte sowohl des vorderen Steuerglieds (20), als auch des Stahlschutzrohrs (41) je nach Steifigkeit gelenkig miteinander und mit der Aufweitvorrichtung (30) verbunden sind.

7. Einrichtung nach Anspruch 6, dadurch gekennzeichnet, daß zur gelenkigen Verbindung von jeweils zwei Abschnitten des Stahlschutzrohres (41) ein Rohrverbindungselement (43) aus mindestens zwei, jeweils mit den Enden der beiden Abschnitte formschlüssig, z.B. durch Verschraubung, verbindbaren Teilen (43a, 43b) vorgesehen ist, an denen rechtwinklig zur Rohrachse verlaufende Abstützflächen zur Ubertragung axialer Druck- und Zugkräfte unter Zwischenschaltung von Dichtungsringen (44, 45) aus elasto-plastischem Material gebildet sind.

8. Einrichtung nach Anspruch 7, dadurch gekennzeichnet, daß zwischen den Stirnflächen der beiden Teile (43a, 43b) sowie zwischen der Wand einer ringförmigen Ausnehmung (49) in dem einen Teil (43a) des Verbindungselementes (43) und der Wand eines Vorsprungs (48) eines mehrteiligen, an dem anderen Teil (43b) des Verbindungselementes (43) befestigten Mantelring (47) je nach Kraftrichtung mit Druck beaufschlagte Abstützflächen gebildet sind.

9. Einrichtung nach einem der Ansprüche 5 bis 8 mit einer Aufweitvorrichtung (30) mit einem konischen Aufweitkopf und einem in einem zylindrischen Aufweitkörper angeordneten, pneumatisch oder hydraulisch betätigbaren, in axialer Richtung wirkenden Schlagwerk, dadurch gekennzeichnet, daß zum Zerstören von Altrohren (6) aus Kunststoff der konische Aufweitkopf (34) mit in Richtung seiner Mantellinie verlaufenden Messern (37) versehen ist und daß an dem zylindrischen Aufweitkörper (33) weitere, schräg zu seiner Mantellinie verlaufende Messer (38) angeordnet sind.

10. Einrichtung nach Anspruch 9, dadurch gekennzeichnet, daß die schräg zur Mantellinie verlaufenden Messer (38) an einem den zylindrischen Aufweitkörper (33) frei drehbar umgebenden Mantelring (39) angeordnet sind.

11. Einrichtung nach einem der Ansprüche 5 bis 10, dadurch gekennzeichnet, daß zum Einziehen eines aus einzelnen, nicht miteinander verbundenen Rohrabschnitten bestehenden Neurohrstranges (7) eine Einziehvorrichtung (50) mit einem axial verlaufenden Zugglied (51) vorgesehen ist, an der in der Länge der Rohrabschnitte (7') entsprechenden Abständen Haltevorrichtungen (52) mit radial spreizbaren speichenartigen Haltearmen (54) befestigt sind, deren äußere Enden in kraftschlüssige Verbindung mit den Rohrabschnitten (7') jeweils in einem Rohrstoß bringbar sind.

12. Einrichtung nach Anspruch 11, dadurch gekennzeichnet, daß die Haltearme (54) an einem zentralen, mit dem Zugglied (51) verbundenen Halteteil (53) spreizbar befestigt sind.

13. Einrichtung nach Anspruch 11 oder 12, dadurch gekennzeichnet, daß zur kraftschlüssigen Verbindung mit den Rohrabschnitten (7') jeweils ein in einen stumpfen Rohrstoß zwischen den Stirnflächen benachbarter Rohrabschnitte (7') einsetzbarer Haltering (55) vorgesehen ist, an dem die äußeren Enden der Haltearme (54) lösbar anbringbar sind.

14. Einrichtung nach Anspruch 13, dadurch gekennzeichnet, daß an dem Haltering (55) entgegen der Einziehrichtung abstehende Haken (56) angeordnet sind, in welche die Haltearme (54) mittels ösen (57) einhängbar sind.

15. Einrichtung nach einem der Ansprüche 11 bis 14, dadurch gekennzeichnet, daß die Haltearme (54) in gespreizter Stellung durch eine elastische Rückstellkraft belastet sind, die nach Freigabe ihrer äußeren Enden ein Einklappen der Haltearme zur Achse des Zugglieds hin bewirkt.

16. Einrichtung nach einem der Ansprüche 5 bis 15, dadurch gekennzeichnet, daß am Ende des Schutzrohres (41) zumindest im oberen Bereich seines Umfanges über diesen hinausragende Vorsprünge (65) angeordnet sind.

17. Einrichtung nach Anspruch 16, dadurch gekennzeichnet, daß die Vorsprünge (65) gleichmäßig über den oberen Bereich des Umfangs verteilt sind.

18. Einrichtung nach Anspruch 16 oder 17, dadurch gekennzeichnet, daß die Vorsprünge (65) demontierbar sind.

## Claims

1. A method of renewing seepage water ducts in waste tips, wherein between a starting shaft (A) and a target shaft (B) the old pipeline is broken up and displaced into the surrounding ground by means of an enlarging device which is provided with an impact mechanism, which is guided through the old pipeline supported by a tension member extending into the target shaft (B), and at the same time a shielding pipe is pushed into place, characterised in that the enlarging device (30) is connected in force-locking manner with the rigid tension member (21) forming the front control member (20) and with a steel shielding pipe (41) forming the rear control member (40), which shielding pipe (41) is guided to follow the enlarging device (30) from the starting shaft (A), and is driven through the old pipeline (6) by simultaneous and equidirectional application on the front control member (20) and the rear control member (40) of a force acting in an axial direction so that the impact energy applied by the impact mechanism can be utilised at least for the most part to break up the old pipeline (6), and in that after the new pipeline (7) has been introduced the steel shielding pipe (41) is withdrawn and its parts are recovered.

2. A method according to Claim 1, characterised in that the application of force is reversible.

3. A method according to Claim 1 or 2, characterised in that the annular space (61) between the new pipeline (7) and the steel shielding pipe (41) is filled with filter material (63).

4. A method according to Claim 3, characterised in that the filter material (63) is introduced by flushing while steel shielding pipe (41) is being withdrawn.

5. An apparatus for carrying out the method according to Claims 1 and 2, having an enlarging device provided with an impact mechanism and having a tension member which can be attached to the front end of the enlarging device and which extends through the old pipe as far as the target shaft, and also having a steel shielding pipe (41) which can be attached to the rear end of the enlarging device and which can be guided to follow it from the starting shaft, characterised in that both the tension member (21) and the steel shielding pipe (41), respectively as the front control member (20) and rear control member (40), comprise individual sections, are designed to be tension and compression resistant and are connected in force-locking manner with the enlarging device (30), and in that both the front control member (20) and the rear control member (40) can be acted upon from the target shaft (B) and from the starting shaft (A) simultaneously and equidirectionally with a tensile force and compressive force respectively.

6. An apparatus according to Claim 5, characterised in that the sections of both the front control member (20) and of the steel shielding pipe (41) are connected, depending on their rigidity, in an articulated manner with one another and with the enlarging device (30).

7. An apparatus according to Claim 6, characterised in that for the articulated connection of two respective sections of the steel shielding pipe (41) a pipe connecting element (43) is provided which comprises at least two parts (43a, 43b) each of which can be connected in form-locking manner, e.g. by screw-connection, with the ends of the two sections and on which are formed bearing surfaces extending at right angles to the pipe axis and serving to transmit axial compression and tensile forces, with the interposition of sealing rings (44, 45) consisting of elasto-plastic material.

8. An apparatus according to Claim 7, characterised in that bearing surfaces, on which pressure is applied depending on the force direction, are formed between the ends faces of the two parts (43a, 43b) and between the wall of an annular recess (49) in one part (43a) of the connecting element (43) and the wall of a projection (48) of a multipart circumferential ring (47) secured to the other part (43b) of the connecting element (43).

9. An apparatus according to any one of Claims 5 to 8, having an enlarging device (30) with a conical enlarging head and a pneumatically or hydraulically actuated impact mechanism which acts in axial direction and which is disposed in a cylindrical enlarging body, characterised in that for the destruction of old pipes (6) of plastics material the conical enlarging head (34) is provided with cutters (37) extending in the direction of its generator, and in that further cutters (38) extending obliquely to its generator are mounted on the cylindrical enlarging body (33).

10. An apparatus according to Claim 9, characterised in that the cutters (38) extending obliquely to the generator are mounted on a circumferential ring (39) encircling the cylindrical enlarging body (33) in a freely rotatably manner.

11. An apparatus according to any one of Claims 5 to 10, characterised in that an insertion device (50) with an axially extending tension member (51) is provided for introducing a new pipeline (7) comprising individual pipe sections which are not connected with one another, to which are fastened, at intervals corresponding to the length of the pipe sections (7'), retaining means (52) having radially expansible spoke-like retaining arms (54), the outer ends of which can be brought into force-locking connection with the pipe sections (7') respectively at one pipe joint.

12. An apparatus according to Claim 11, characterised in that the retaining arms (54) are expansibly secured to a central retaining part (53) connected with the tension member (51).

13. An apparatus according to Claim 11 or 12, characterised in that for the force-locking connection with the pipe sections (7') a respective retaining ring (55) is provided which can be inserted in a butt joint between the end faces of adjoining pipe sections (7') and on which the outer ends of the retaining arms (54) can be releasably mounted.

14. An apparatus according to Claim 13, characterised in that hooks (56) projecting counter to the insertion direction are disposed on the retaining ring (55) and on to which the retaining arms (54) can be hooked by means of lugs (57).

15. An apparatus according to any one of Claims 11 to 14, characterised in that in the expanded condition the retaining arms (54) are loaded by an elastic restoring force which, after its outer ends have been disengaged, induces retraction of the retaining arms towards the axis of the tension member.

16. An apparatus according to any one of Claims 5 to 15, characterised in that projections (65) are provided at the end of the shielding pipe (41) at least in the upper region of its periphery, said projections protruding beyond said periphery.

17. An apparatus according to Claim 16, characterised in that the projections (65) are spaced apart uniformly over the upper region of the periphery.

18. An apparatus according to Claim 16 or 17, characterised in that the projections (65) can be dismounted.

## Revendications

1. Procédé de rénovation de conduites d'eau d'infiltration dans des décharges, dans lequel, entre un puits de départ (A) et un puits d'arrivée (B), on procède à la démolition de l'ancienne conduite tubulaire, à l'aide d'un dispositif d'élargissement pourvu d'un mécanisme percuteur, guidé avec appui dans l'ancienne conduite tubulaire au moyen d'un organe de traction s'étendant jusque dans le puits d'arrivée (B), et, en même temps, un tube de protection est poussé dans le sol environnant, caractérisé en ce que le dispositif d'élargissement (30) est relié mécaniquement à l'organe de traction (21) réalisé résistant à la pression, sous forme d'organe de commande avant (20) et est relié à un tube de protection en acier (41) guidé remorqué depuis le puits de départ (A) et servant d'organe de commande arrière (40) et par une sollicitation, simultanée et agissant dans le même sens, de l'organe de commande avant (20) et de l'organe arrière (40), au moyen d'une force agissant dans la direction axiale, en passant à travers l'ancienne conduite tubulaire (6), de sorte que l'énergie de percussion exercée par le mécanisme percuteur puisse être utilisée, au moins pour la partie principale, pour démolir l'ancienne conduite tubulaire (6) et en ce que le tube de protection en acier (41) est tiré après insertion par traction du nouveau tronçon tubulaire (7), ses composants étant réutilisés.

2. Procédé selon la revendication 1 caractérisé en ce que la sollicitation mécanique peut être inversée.

3. Procédé selon la revendication 1 ou 2, caractérisé en ce que l'espace annulaire (61) existant entre le tronçon de nouveau tube (7) et le tube de protection en acier (41) est rempli d'un matériau filtrant (63).

4. Procédé selon la revendication 3, caractérisé en ce que le matériau filtrant (3) est introduit par rinçage au cours de la traction du tube de protection en acier (41).

5. Dispositif pour la mise en oeuvre du procédé selon les revendications 1 et 2, avec un dispositif d'élargissement pourvu d'un mécanisme percuteur et avec un organe de traction, pouvant être monté à l'extrémité avant du dispositif d'élargissement, s'étendant à travers l'ancien tube, jusqu'au puits d'arrivée, ainsi qu'avec un tube de protection en acier, pouvant être monté à l'extrémité arrière du dispositif d'élargissement, susceptible d'être guidé et remorqué depuis le puits de départ, caractérisé en ce que tant l'organe de traction (21) qu'également le tube de protection en acier (41) sont constitués chacun sous forme d'organe de commande avant (20), respectivement arrière (40), formés à partir de tronçons individuels, d'une réalisation résistante en traction et en compression, et reliés mécaniquement au dispositif d'élargissement (30), et en ce que tout aussi bien l'organe de commande avant (20) peut être sollicité depuis le puits d'arrivée (B) qu'également l'organe de commande arrière (40) depuis le puits de départ (A), simultanément, et dans le même sens, par une force de traction, respectivement de compression.

6. Dispositif selon la revendication 5, caractérisé en ce que les tronçons tant de l'organe de commande avant (20) qu'également du tube de protection en acier (41) sont reliés entre eux de façon articulée selon la rigidité et reliés au dispositif d'élargissement (30).

7. Dispositif selon la revendication 6, caractérisé en ce que , pour assurer une liaison articulée de chaque fois deux tronçons du tube de protection en acier (41), il est prévu un élément de liaison tubulaire (43) composé d'au moins deux parties (43a, 43b), susceptibles d'être respectivement reliées avec ajustement de forme aux extrémités des deux tronçons, par exemple par vissage, parties sur lesquelles des faces d'appui s'étendant perpendiculairement par rapport à l'axe du tube, destinées à la transmission des efforts de compression et de traction axiaux, sont formées avec interposition de bagues d'étanchéité (44, 45) en matériau élasto-plastique.

8. Dispositif selon la revendication 7, caractérisé en ce qu'entre les faces frontales des deux parties (43, 43b) ainsi qu'entre la paroi d'un évidement annulaire (49) dans une partie (43a)de l'élément de liaison (43) et la paroi d'une saillie (48) d'une bague d'enveloppe (47) en plusieurs parties fixée sur l'autre partie (43b) de l'élément de liaison (43) sont formées des faces d'appui sollicitées en pression selon la direction de la force.

9. Dispositif selon l'une des revendications 5 à 8, avec un dispositif d'élargissement (30) présentant une tête d'élargissement conique et un mécanisme percuteur disposé dans un corps d'élargissement cylindrique, pouvant être actionné pneumatiquement ou hydrauliquement, agissant dans la direction axiale, caractérisé en ce que, pour détruire les anciens tubes (6) en matière synthétique, la tête d'élargissement (34) conique est pourvue de lames (37) s'étendant dans la direction de sa génératrice, et en ce que sur le corps d'élargissement (33) cylindrique sont disposées d'autres lames (38) s'étendant obliquement par rapport à sa génératrice.

10. Dispositif selon la revendication 9, caractérisé en ce que les lames (38) s'étendant obliquement par rapport à la génératrice sont disposées sur une bague d'enveloppe (39) entourant de façon à pouvoir tourner librement le corps d'élargissement cylindrique (33).

11. Dispositif selon l'une des revendications 5 à 10, caractérisé en ce que, pour introduire par traction un tronçon de nouveau tube (7) composé de tronçons tubulaires individuels non reliés entre eux, il est prévu un dispositif d'introduction par traction (50), avec un organe de traction (51) s'étendant axialement, sur lequel sont fixés, à des espacements correspondants dans la longueur des tronçons tubulaires (7'), des dispositifs de maintien (52) avec des bras de maintien (54) disposés en rayons, pouvant être écartés radialement, dont les extrémités extérieures peuvent être amenées en liaison mécanique avec les tronçons tubulaires (7') chaque fois en formant une liaison bout-à-bout des tubes.

12. Dispositif selon la revendication 11, caractérisé en ce que les bras de maintien (54) sont fixés de façon à pouvoir s'écarter sur une partie de maintien (53) centrale, reliée à l'organe de traction (51).

13. Dispositif selon la revendication 11 ou 12, caractérisé en ce que, pour assurer la liaison mécanique avec les tronçons tubulaires (7'), est chaque fois prévue une bague de maintien (55) pouvant être insérée avec mise bout-à-bout des tuyaux entre les faces frontales de tronçons tubulaires (7') voisins, bague de maintien sur laquelle les extrémités extérieures des bras de maintien (54) peuvent être montées amovibles.

14. Dispositif selon la revendication 13, caractérisé en ce que des crochets (56) faisant saillie à l'opposé des dispositifs d'insertion par traction, dans lesquels les bras de maintien (54) peuvent être accrochés au moyen d'oeillets (57), sont disposés sur la bague de maintien (55).

15. Dispositif selon l'une des revendications 11 à 14, caractérisé en ce que les bras de maintien (54) sont sollicités en position écartée par une force de rappel élastique qui provoque, après libération de leurs extrémités extérieures, un escamotage des bras de maintien, en direction de l'axe de l'organe de traction.

16. Dispositif selon l'une des revendications 5 à 15, caractérisé en ce que les saillies (65) sont disposées à l'extrémité du tube de protection (41), au moins dans la zone supérieure de sa périphérie et en dépassant de celle celle-ci.

17. Dispositif selon la revendication 16, caractérisé en ce que les saillies (65) sont réparties régulièrement sur la zone supérieure de la périphérie.

18. Dispositif selon la revendication 16 ou 17, caractérisé en ce que les saillies (65) sont démontables.
